# EUROPÄISCHE PATENTANMELDUNG

(11) **EP 0 912 013 A1**
(43) Veröffentlichungstag der Anmeldung: **28.04.1999**
(21) Anmeldenummer: 97118146.6
(22) Anmeldetag: 20.10.1997
(51) Int. Cl.: H04L 12/22, H04L 29/06, H04L 9/32

(54) **Verfahren zur Sicherung des Zugangs zu einer Anwendung eines vernetzten Systems**

(71) Anmelder: SIEMENS AKTIENGESELLSCHAFT, 80333 München (DE)
(72) Erfinder: Deininger, Andreas, Dipl.-Inform., 86938 Schondorf (DE); Müller, Klaus Dieter, Dipl.-Ing., 81477 München (DE); Lauer, Maria, 82275 Emmering (DE); Nauer, Bernhard, Dipl.-Math., 81373 München (DE)

(57) **Zusammenfassung**

Manchen verteilten Anwendungen liegt noch ein Kommunikations-Protokoll zugrunde, das bezüglich der Sicherung des Zugangs nur die Übertragung eines unstrukturierten Paßwort-Strings vorsieht. Durch das erfindungsgemäße Verfahren wird bei einem solchen Kommunikations-Protokoll in den unstrukturierten Paßwort-String ein strukturiertes Einmal-Paßwort abgebildet und dadurch die Zugangssicherheit entsprechend erhöht.

## Beschreibung

Zur Gewährleistung der Integrität und Schutz vor Mißbrauch sind bei vernetzten Systemen adäquate Schutzmechanismen zwingend erforderlich und vielfach gesetzlich vorgeschrieben. Fur offene Systeme sind entsprechende Sicherheitsmaßnahmen in der ITU rec. X.800: 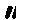 Security Architecture for Open Systems Interconnection" und folgende aufgeführt. Als eine wesentliche Sicherheitsfunktion ist bei jedem Verbindungsaufbau zu einer Komponente (Z.B. Rechner, Server) eines vernetzten Systems eine Identifizierung (Identification) und Authentisierung (Authentication) des entfernten Partners, der einen Systemzugang anstrebt, erforderlich.

Im folgenden wird als Beispiel eines vernetzten Systems ein TMN-System (TMN = Telecommunications Management Networks = Netz zur Administration von Telecommunications Anlagen) näher betrachtet. In einem TMN-System existieren u.a. folgende Kommunikationsprotokolle:
a)MML-Protokoll, das den TMN-Zugang über unterschiedliche - oftmals nicht normierte - Schnittstellen unterstützt.
b)Q3-Protokoll, das den TMN-Zugang gemäß ITU rec. X.711 (Common Management Information Protocol) unterstützt.
c)Filetransfer-Protokolle (FTAM, FTP), die den TMN-Zugang gemäß FTAM (ISO 8571) / FTP (RFC 959 u. RFC 1123) unterstützen.

Bei (verteilten) Anwendungen des TMN-Systems, die die genannten Protokolle verwenden, werden derzeit folgende Authentisierungs-Verfahren (peer entity authentication) durchgeführt:
bei a):
   Die Authentisierung erfolgt bei einer MML-Anwendung über eine Userid, die im System administriert ist und ein Paßwort, das der User vergibt. Userid und Paßwort werden 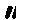 unverschlüsselt" über die Leitung übertragen und können abgehört werden; mit dieser Information ist ein unberechtigter Zugriff durch einen Dritten möglich (Replay Attacke).
bei b):
   Der Verbindungsaufbau erfolgt bei einer Q3-Anwendung (CMIP-Anwendung) nach dem ACSE Protokoll (ITU rec. X.217); hierbei können Authentisierungsdaten strukturiert (eine entsprechende Syntax ist in ITU rec. X.511 definiert) übertragen werden. Fur die Authentisierung kann ein "Replay Protected Password" Mechanismus gem. ITU rec. X.509 (Directory Access Protocol) eingesetzt werden, der durch Verwendung von Einmal-Paßwörtern einen unberechtigten Systemzugang mit einem ausgespähten Paßwort verhindert. Das übertragene Paßwort wird mit Hilfe einer speziellen Einweg-Funktion ("one way function"), für die keine reverse Funktion zur Entschlüsselung existiert, verschlüsselt - d.h. selbst mit Kenntnis der Einweg-Funktion und des einwegverschlüsselten Paßworts ist es nicht möglich, das ursprünglich Paßwort zu rekonstruieren.
   Bezüglich der Authentisierung werden hierzu folgende Informationen übertragen:
   - Die Initiator Id (Eindeutige Kennung für den entfernten Initiator des Verbindungsaufbaus ).
   - Datum/Uhrzeit (time) und/oder Zufallszahl (random), die der Initiator vergibt.
   - Ein Einmal-Paßwort (rpPaßwort), das mit Hilfe von Einweg-Funktionen (OWF) aus dem Orginal-Paßwort (oPaßwort), Uhrzeit und/oder Zufallszahl in einer ein- oder zweistufigen Verschlüsselung gebildet wird (vgl. ITU rec. X.509):

   Das Orginal-Paßwort ist nur beim Initiator und beim Zielrechner bekannt und kann auf der Leitung nicht abgehört werden. Mit Hilfe der übertragenen Zeit(en) und/oder Zufallszahl(en) wird beim Empfänger die gleiche Verschlüsselung nochmals durchgeführt. Nur bei Übereinstimmung mit dem übertragenen Einmal-Paßwort ist die Authentisierung erfolgreich. Ein Zugangsversuch mit einem abgehorten rpPaßwort ist nicht möglich, da die Authentisierung abgelehnt wird, wenn die Zufallszahl wiederholt wird und/oder die Zeit nicht mehr gültig ist.
bei c):
   Bei der Anwendung 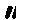 Filetransfer" sehen die verwendeten Protokolle FTAM oder FTP beim Verbindungsaufbau eine Zugangssicherung (Identifizierung und Authentisierung) mit Hilfe eines Initiators Id und eines Paßworts vor, wobei das Paßwort als unstrukturierter Text-String (FTP) bzw. Text- oder Binär-String (FTAM) übertragen wird. Durch das Ausspähen der Zugangssicherungs-Daten sind daher Replay Attacken möglich.

In einem TMN-System sind insbesondere die Systemzugänge gemäß b) und c) von Bedeutung. Es ist daher ein einheitlicher Zugangsschutz für Q3 und Filetransfer unter folgenden Randbedingungen erstrebenswert:
- Schutz vor Replay-Attacken auch bei Filetransfer.
- Die Filetransfer-Protokolle für FTAM und FTP sind genormt, eine Protokoll-Änderung - zur Übertragung der Authentisierungsdaten - ist nicht möglich.
- Es soll ein vergleichbar 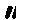 einfaches" Verfahren, ohne Einsatz von externer Hardwarekomponenten (z.B. Security Box) zum Einsatz kommen.

Der Erfindung liegt die Aufgabe zugrunde, ein Verfahren zur Sicherung des Zugangs zu einem Anwendersystem anzugeben, durch das die Sicherung trotz eines Kommunikations-Protokolls, das bezuglich der Sicherung des Zugangs nur die Übertragung eines unstrukturierten Paßwort-Strings vorsieht, erhöht wird.

Diese Aufgabe wird durch ein Verfahren gemaß Anspruch 1 gelöst.

Der Erfindung liegt des weiteren die Aufgabe zugrunde, ein Anwendersystem anzugeben, bei dem die Zugangssicherung trotz eines Kommunikations-Protokolls, das bezüglich der Sicherung des Zugangs nur die Übertragung eines unstrukturierten Paßwort-Strings vorsieht, erhöht ist.

Diese Aufgabe wird durch ein Anwendersystem gemäß Anspruch 6 gelöst.

Durch die erfindungsgemäße Abbildung der strukturierten Information auf einen unstrukturierten Paßwort-String wird ein wesentlich besserer Zugangsschutz ohne Anderung des Übertragungsprotokolls ermöglicht. Der Aufwand für die zusätzlichen Komponenten des Anwendersystems zur Einweg-Verschlüsselung und Validierung ist relativ gering.

Im folgenden wird ein Ausführungsbeispiel der Erfindung anhand der Zeichnung näher erläutert.
FIG 1 zeigt die Generierung der Komponente rpPaßwort eines Einmal-Paßworts nach ITU rec. X.509.
FIG 2 zeigt die Übertragung des Einmal-Paßworts im Paßwortstring.
FIG 3 zeigt die FTAM-/FTP Authentisierung mit Replay Protected Password.

Als Beispiel dient wiederum ein TMN-System. In einem TMN-System ist, wie bereits erwähnt, ein einheitlicher Zugangsschutz für die Anwendersysteme 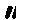 Q3" und 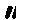 Filetransfer" unter folgenden Randbedingungen erstrebenswert:
- Schutz vor Replay-Attacken auch bei Filetransfer.
- Die Filetransfer-Protokolle für FTAM und FTP sind genormt, eine Protokoll-Änderung - zur Übertragung der Authentisierungsdaten - ist nicht möglich.
- Es soll ein vergleichbar 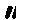 einfaches" Verfahren, ohne Einsatz von externer Hardwarekomponenten (z.B. Security Box) zum Einsatz kommen.

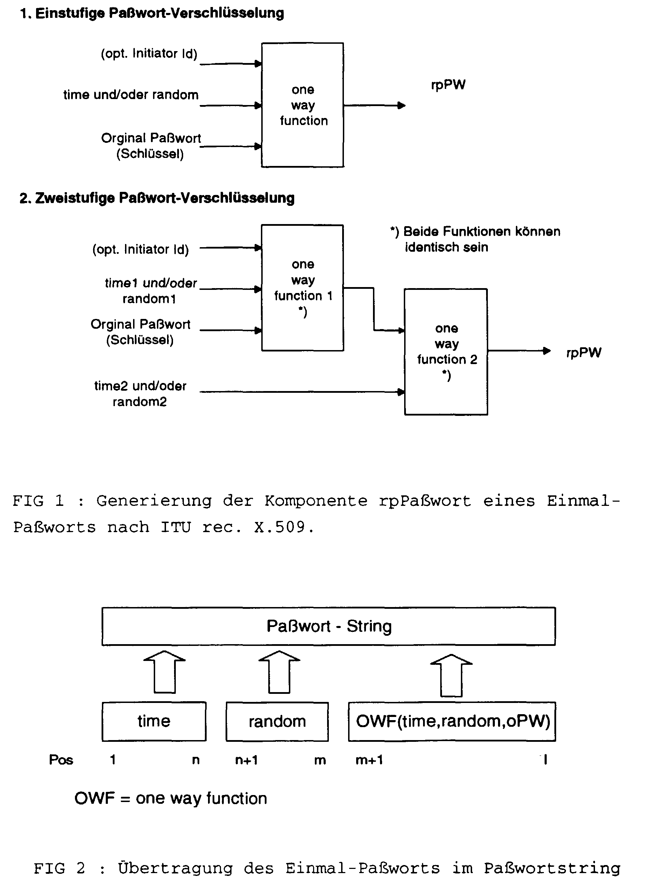

Die genannten Bedindungen sind durch die Anwendung eines Einmal-Paßwort-Verfahrens bei den existierenden Filetransfer-Protokollen erfüllbar. Zum Schutz vor Replay-Attacken wird das Verfahren der Einweg-Verschlüsselung für die Filetransfer-Protokolle adaptiert. Die Generierung eines Einmal-Paßworts erfordert im allgemeinen Fall folgende Komponenten:
a)Ein symmetrischer Schlüssel (geheimes Paßwort), der nur beim Initiator (Client) und beim Server, der die Authentisierung durchführt, bekannt ist. Dieses Paßwort selbst wird nicht (unverschlüsselt) übertragen.
b)Ein Initiator ID zur eindeutigen Identifizierung des Initiators.
c)Variable Komponenten, wie Uhrzeit und/oder Zufallszahlen und/oder Folgenummern. Diese Komponenten ändern sich bei jeder Authentisierung und verhindern somit, daß ein abgehörtes Einmalpaßwort für eine Replay-Attacke wiederverwendet werden kann. Sofern diese Komponenten beim Server nicht automatisch abgeleitet werden können, müssen sie bei der Authentisierung mit übertragen werden.
d)Zusätzliche Daten, wie z.B. Initiator Id oder beliebiger Text, die in die Bildung des Einmal-Paßworts mit einfließen. Diese Daten sind entweder auf bei beiden Seiten bekannt bzw. ableitbar oder werden zusätzlich übertragen.
e)Eine codierte Information (Einmal-Paßwort), die mit Hilfe einer Einweg-Funktion zur Verschlüsselung aus obigen Komponenten in einem einstufigen Verfahren oder in einem mehrstufigen Verfahren - evtl. durch verschiedene Einweg-Funktionen - gebildet wird (siehe FIG 1).

Verfahren zur Einweg-Verschlüsselung und Authentisierung sind z.B. in ITU rec. X.509 (Directory Authentication - siehe 2.) und ISO 9798-4 dokumentiert.

Die Authentisierungs-Protokolle für Filetransfer sehen nur die Übertragung eines unstrukturierten Paßwortstrings vor und nicht die strukturierte Übertragung verschiedener Komponenten, wie dies bei der Verwendung von Einmal-Paßwörtern erforderlich wäre.

Um diesen Nachteil zu überwinden wird daher ein Verfahren eingeführt, das - transparent für das eigentliche Filetransfer-Protokoll - eine eindeutige Abbildung dieser Komponenten auf den Paßwortstring durchfuhrt. Diese Abbildung muß beim Initiator und beim Server bekannt und identisch sein. Hierbei sind u.a. folgende Verfahren möglich:
- Die einzelnen Komponenten werden auf festen Bytepositionen übertragen und ggf. mit vorgegebenen Füllbytes aufgefüllt.
- Es werden zusätzlich Pointer auf die einzelnen Komponenten auf festen Positionen übertragen.
- Die Komponenten werden in einer festen Reihenfolge mit zusätzlichen Längenfeldern übertragen.

Diese Abbildung ist bei einem Kommunikations-Protokoll, das bezüglich der Sicherung des Zugangs nur die Übertragung eines unstrukturierten Paßwort-Strings vorsieht, z.B. bei FTAM/FTP, ohne Protokolländerung möglich. Die Codierung des Paßworts beim Initiator und die Verifikation im Server kann dabei durch zusätzliche Komponenten außerhalb des eigentlichen Filetransfer-Protokolls erfolgen. In den Fällen, in denen Paßwörter (z.B. FTP) nicht binär übertragbar sind, kann zusätzlich eine ASCII-Codierung - mit Hilfe eines gängigen Verfahrens - des Binärpaßworts vorgenommen werden.

Die Generierung des Einmal-Paßworts erfolgt in einem einstufigen Verfahren gemäß ITU rec. X.509; als Einweg-Funktion zur Paßwort-Verschlüsselung wird der MD5 (Message Digest) Algorithmus nach RFC 1325 verwendet. Die einzelnen Komponenten werden auf festen Bytepositionen im Paßwortstring übertragen (siehe FIG 2)

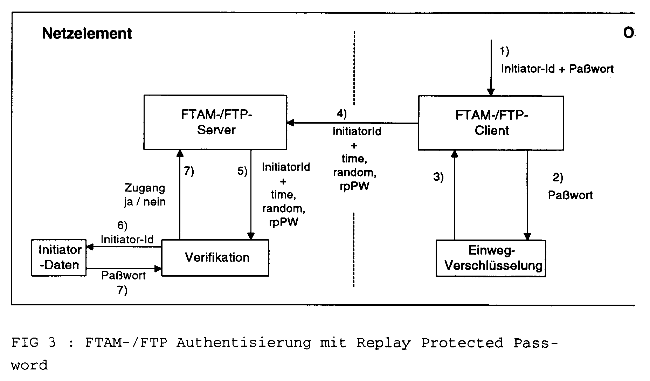

Neben der Implementierung der Initiator/Paßwort-Authentisierung im FTAM/FTP-Server im Netzelement ist eine entsprechende Funktion bei den FTAM-/FTP-Clients in den Bedienrechnern (OS) zur Generierung des Einmal-Paßworts erforderlich (siehe FIG 3).

Im folgenden werden anhand von FIG 3 nochmals die Schritte des Verfahrens erläutert:
1): Fur die Authentisierung beim Aufbau einer FTAM/FTAM Verbindung wird die Initiator-Id und das zugehörige Paßwort übergeben.
2) + 3): Aus dem Paßwort generiert eine spezielle Generator-Komponente das strukturierte Einmalpaßwort bestehend aus Datum/Uhrzeit (time) und/oder Zufallszahl (random) und dem Ergebnis der Einwegverschlüsselung (rpPW).
4): Der FTAM/FTP client überträgt das strukturierte Einmalpaßwort und die Initiator-Id beim Verbindungsaufbau an den entfernten FTAM/FTP Server.
5): Die Authentisierungsinformation wird einer speziellen Komponente zur Verifikation übergeben.
6)+ 7): Aus der Authentisierungsdatenbasis wird das (geheime) Paßwort des Initiators ausgelesen. Mit diesem Paßwort wird die gleiche Einwegverschlüsselung wie beim Initiator durchgeführt. Die Authentisierung ist erfolgreich, wenn der hierbei generierte Wert identisch mit dem übertragenen rpPW ist.
7): Abhängig vom Ergebnis der Verifikation wird der Verbindungsaufbau akzeptiert oder abgelehnt.

Verwendete Abkürzungen:
- FTAM: File Transfer Access and Management
- FTP: File Transfer Protocol
- ITU: International Telecommunication Union
- ISO: International Standardization Organization
- MD5: Message Digest Algorithmus No. 5
- MML: Man Machine Language
- OWF: One Way Function
- OS: Operations System
- RFC: Request for Comment
- TMN: Telecomunication Management Network

## Patentansprüche

1. Verfahren zur Sicherung des Zugangs zu einer Anwendung eines vernetzten Systems, wobei die Anwendung ein Kommunikations-Protokoll benutzt, das bezüglich der Zugangssicherung die Übertragung eines unstrukturierten Paßwort-Strings vorsieht, demgemäß
a)von einer Initiator-Komponente der Anwendung ein Einmal-Paßwort gebildet wird,
b)von der genannten Initiator-Komponente das strukturierte Einmal-Paßwort in den unstrukturierten Paßwort-String des Kommunikations-Protokolls abgebildet wird und mit Hilfe des gen. Kommunikations-Protokolls zu einer Reaktions-Komponente der Anwendung gesendet wird,
c)von der genannten Reaktions-Komponente aus dem empf Paßwort-String das darin abgebildete Einmal-Paßwort entnommen wird,
d)von der genannten Reaktions-Komponente nachfolgend anhand des Einmal-Paßwort eine Auth. des Initiators durchgeführt wird.

2. Verfahren nach Anspruch 1,
**dadurch gekennzeichnet**, daß
das Einmal-Paßwort in den unstrukturierten Paßwort-String abgebildet wird, indem die einzelnen Komponenten des Einmal-Paßwort auf festen Bytepositionen des Paßwort-Strings übertragen und ggf. mit vorgegebenen Füllbytes aufgefüllt werden.

3. Verfahren nach Anspruch 1,
**dadurch gekennzeichnet**, daß
das Einmal-Paßwort in den unstrukturierten Paßwort-String abgebildet wird, indem Pointer auf festen Positionen des Paßwort-Strings übertragen werden, die auf die einzelnen Komponenten des Einmal-Paßwort innerhalb des Paßwort-Strings zeigen.

4. Verfahren nach Anspruch 1,
**dadurch gekennzeichnet**, daß
das Einmal-Paßwort in den unstrukturierten Paßwort-String abgebildet wird, indem im Paßwort-String die Komponenten des Einmal-Paßwort in einer festen Reihenfolge tibertragen werden, wobei jede Komponente ein zusätzliches Langenfeld umfaßt.

5. Verfahren nach einem der Ansprüche 1 bis 4,
**dadurch gekennzeichnet**, daß
es sich bei dem genannten Kommunikations-Protokoll um FTAM nach ISO 8571 oder FTP nach RFC 959 u. RFC 1123 handelt.

6. Anwendungssystem eines vernetzten Systems, mit
a) einem Kommunikations-Protokoll, das bezüglich der Sicherung des Zugangs die Übertragung eines unstrukturierten Paßwort-Strings vorsieht,
b) einer Initiator-Komponente, die die Anwendung initiiert, indem sie eine Verbindungsanforderungs-Nachricht zu einer Reaktions-Komponente sendet, die den genannten unstrukturierten Paßwort-String enthält,
c) einer Reaktions-Komponente, die genannte Verbindungsanforderungs-Nachricht bearbeitet, wobei sie hierbei anhand des Paßwort-Strings eine Authenzitätsprüfung durchfuhrt,
**dadurch gekennzeichnet**, daß
d) die Initiator-Komponente das Paßwort in einer eindeutigen Weise auf das Paßwort abbildet,
e) die Initiator-Komponente den derart vorbereiteten Paßwort-String mithilfe des gen. Kommunikations-Protokolls zur Reaktions-Komponente sendet,
f) die Reaktions-Komponente dem empf Paßwort-String das darin abgebildete Einmal-Paßwort entnimmt,
g) die Reaktions-Komponente nachfolgend anhand des Einmal-Paßworts eine Auth. des Initiators durchführt.

7. Anwendungssystem nach Anspruch 6,
**dadurch gekennzeichnet**, daß
es sich bei dem Anwendungssystem um ein File-Transfer-System handelt.

8. Initiator-Komponente eines Anwendungssystems für eine verteilte Anwendung, mit
a) einer Client-Komponente, die die Anwendung initiiert, indem sie eine Verbindungsanforderungs-Nachricht zu einer Reaktions-Komponente sendet, die einen unstrukturierten Paßwort-String enthalt,
**gekennzeichnet durch**
b) eine Generator-Komponente, die ein strukturiertes Einmal-Paßwort generiert und das strukturierte Einmal-Paßwort in den unstrukturierten Paßwort-String der Client-Komponente abbildet.

9. Reaktions-Komponente eines Anwendungssystems für eine verteilte Anwendung, mit
einer Server-K, die eine Verbindungsanforderungs-Nachricht bearbeitet, wobei sie hierbei den in der Verbindungsanforderungs-Nachricht enthaltenen Paßwort-String an eine Auth.-Komponente übergibt,
gekennzeichnet durch
die genannte Auth.-Komponente, die aus dem empf Paßwort-String das darin abgebildete Einmal-Paßwort entnimmt und nachfolgend anhand des Einmal-Paßworts eine Auth. des Initiators durchfuhrt.
